# EUROPEAN PATENT APPLICATION

(11) **EP 4 851 925 A1**
(43) Date of publication of application: **09.12.2026**
(21) Application number: 25748426.1
(22) Date of filing: 08.01.2025
(51) Int. Cl.: G06T 7/90, G06T 7/00

(54) **VEHICLE BODY STATE ESTIMATION SYSTEM, VEHICLE BODY STATE ESTIMATION METHOD, AND PROGRAM**

(30) Priority: 30.01.2024 JP 2024011659
(71) Applicant: Panasonic Intellectual Property Management Co., Ltd., Kadoma-shi, Osaka 571-0057 (JP)
(72) Inventor: KANAMORI, Keita, Kadoma-shi, 571-0057 Osaka (JP)
(74) Representative: Appelt, Christian W.
(86) International application number: PCT/JP2025/000421
(87) International publication number: WO 2025/164244

(57) **Abstract**

A vehicle body state estimation system (1) estimates the state of a vehicle (2) that is a human-powered vehicle or an electric bicycle. The vehicle body state estimation system (1) includes: an obtainer (11) that obtains appearance information that is information indicating the appearance of the vehicle (2); an analyzer (12) that analyzes the appearance information and extracts a region included in the appearance of the vehicle (2) from the appearance information; a component estimator (13) that estimates the color of the region extracted by the analyzer (12); and a state estimator (14) that estimates whether the state of the vehicle (2) is an abnormal state or a normal state based on the color of the region that is estimated by the component estimator (13), and outputs a result of the estimation.

## Description

### [Technical Field]

The present disclosure relates to a vehicle body state estimation system, a vehicle body state estimation method, and a program.

### [Background Art]

As a conventional technique, Patent Literature (PTL) 1 discloses a detection device. The detection device includes a control unit that detects a worn part of a human-powered vehicle as a detected worn part from a first image containing at least a portion of the human-powered vehicle, and outputs wear information regarding a degree of wear of the detected worn part.

### [Citation List]

### [Patent Literature]

[PTL 1] Japanese Unexamined Patent Application Publication No. 2020-203547

### [Summary of Invention]

### [Technical Problem]

For example, determining the state of a vehicle requires expert knowledge. If a user of a vehicle does not consult a specialized service provider capable of determining the state of the vehicle, the user may take measures, such as, sending the vehicle for repair after the vehicle actually fails. In such a case, more repair costs and repair time are required.

In this regard, PTL 1 discloses the detection device that enables a user of a human-powered vehicle to easily obtain information regarding the wear level of a worn part in the vehicle.

However, even if the detection device disclosed in PTL 1 displays the wear level of a component in a vehicle, the determination as to when to replace the component is left to the user. Therefore, the component may be replaced after it has failed. In addition, since the detection device merely displays information regarding the wear degree of a component, only a part of various components included in the vehicle may be replaced. This leads to an increased frequency of failures of the vehicle and an increase in maintenance costs of the vehicle.

Accordingly, the present disclosure provides a vehicle body state estimation system, a vehicle body state estimation method, and a program that are capable of suppressing an increase in maintenance costs of a vehicle while suppressing an increase in a frequency of failures of the vehicle.

### [Solution to Problem]

In order to address the above, a vehicle body state estimation system according to an aspect of the present disclosure estimates a state of a vehicle that is a human-powered vehicle or an electric bicycle, and includes: an obtainer that obtains appearance information that is information indicating an appearance of the vehicle; an analyzer that analyzes the appearance information and extracts, from the appearance information, a region included in the appearance of the vehicle; a component estimator that estimates a color of the region extracted by the analyzer; and a state estimator that estimates whether the state of the vehicle is an abnormal state or a normal state based on the color of the region that is estimated by the component estimator, and outputs a result of the estimation.

In order to address the above, a vehicle body state estimation method according to another aspect of the present disclosure is a method for estimating a state of a vehicle that is a human-powered vehicle or an electric bicycle, and includes: obtaining, by an obtainer, appearance information that is information indicating an appearance of the vehicle; analyzing the appearance information, and extracting, from the appearance information, a region included in the appearance of the vehicle, the analyzing and the extracting being performed by an analyzer; estimating, by a component estimator, a color of the region extracted by the analyzer; and estimating whether the state of the vehicle is an abnormal state or a normal state based on the color of the region that is estimated by the component estimator, and outputting a result of the estimating, the estimating and the outputting being performed by a state estimator.

In order to address the above, a program according to still another aspect of the present disclosure is a program for causing a computer to execute the vehicle body state estimation method.

### [Advantageous Effects of Invention]

According to the vehicle body state estimation system and the like according to the present disclosure, it is possible to suppress an increase in maintenance costs of a vehicle while suppressing an increase in a frequency of failures of the vehicle.

### [Brief Description of Drawings]

[FIG. 1]

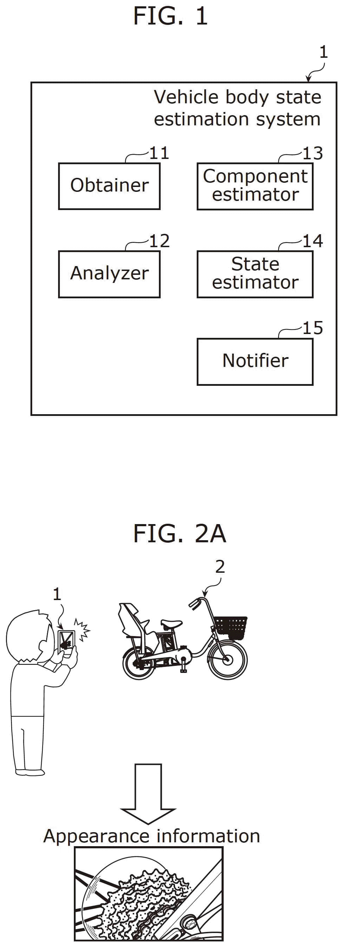

   FIG. 1 is a block diagram showing a vehicle body state estimation system according to an embodiment.
[FIG. 2A]
   FIG. 2A is a diagram showing a scene where mechanical components of a vehicle are imaged, and the imaged appearance information.
[FIG. 2B]

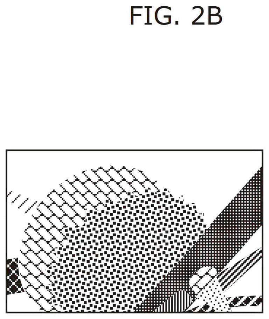

   FIG. 2B is a diagram showing the plurality of mechanical components whose colors are estimated.
[FIG. 3]

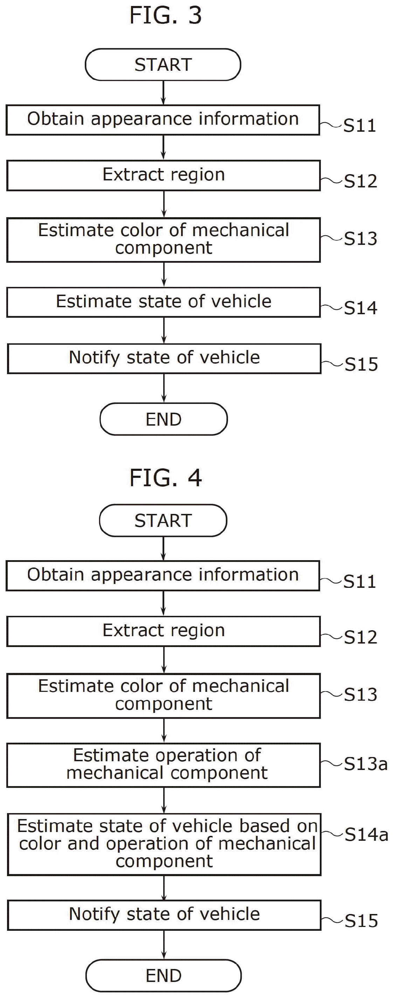

   FIG. 3 is a flowchart showing operation example 1 of the vehicle body state estimation system according to the embodiment.
[FIG. 4]
   FIG. 4 is a flowchart showing operation example 2 of the vehicle body state estimation system according to the embodiment.
[FIG. 5]

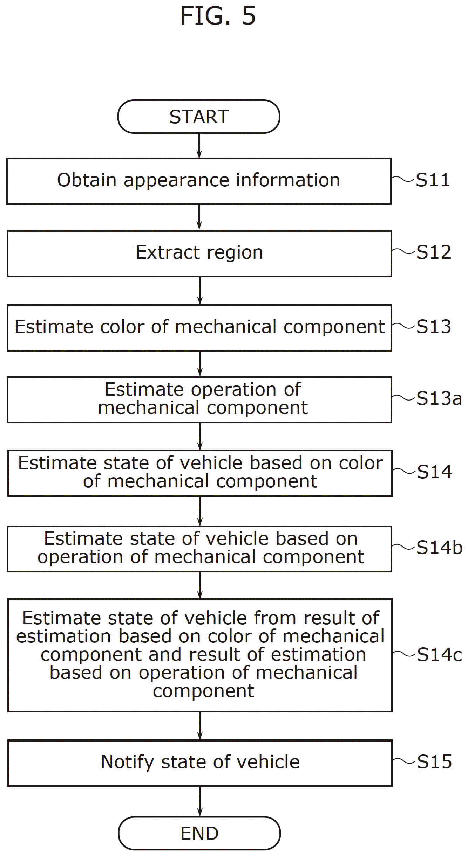

   FIG. 5 is a flowchart showing operation example 3 of the vehicle body state estimation system according to the embodiment.

### [Description of Embodiment]

Hereinafter, an embodiment of the present disclosure will be described in detail with reference to the accompanying Drawings. The following embodiment is a specific example of the present disclosure. Therefore, the numerical values, shapes, materials, constituent elements, arrangement and connection forms of the constituent elements, steps, the order of the steps, and the like described in the following embodiment are merely examples, and are not intended to limit the present disclosure. Among the constituent elements in the following embodiment, those not described in any one of the independent claims are described as optional elements.

Note that the respective figures are schematic diagrams and are not necessarily precise illustrations. Therefore, the scales or the like applied in the figures are not necessarily unified. Additionally, constituent elements that are essentially the same share like reference signs in the figures. Accordingly, overlapping explanations thereof are omitted or simplified.

The following describes a vehicle body state estimation system, a vehicle body state estimation method, and a program according to the embodiment.

### (Embodiment)

### <Configuration>

First, with reference to FIGS. 1 and 2A, the configuration of vehicle body state estimation system 1 will be described.

FIG. 1 is a block diagram showing vehicle body state estimation system 1 according to an embodiment. FIG. 2A is a diagram showing a scene where mechanical components of vehicle 2 are imaged, and the imaged appearance information. FIG. 2B is a diagram showing the plurality of mechanical components whose colors are estimated. In FIG. 2B, the colors of the respective regions are shown by different hatching.

As shown in FIG. 1, vehicle body state estimation system 1 is, for example, a portable external device such as a smartphone, a tablet terminal, or a wearable terminal, or an installed external device such as a surveillance camera or a port-installed sensor. In the embodiment, a portable external device is shown as an example of vehicle body state estimation system 1. In the embodiment, such portable external devices and installed external devices may be collectively referred to as terminal devices.

Such vehicle body state estimation system 1 is capable of estimating the state of vehicle 2 that is a human-powered vehicle or an electric bicycle. The state of vehicle 2 is the states of the mechanical components included in vehicle 2. In the embodiment, an electric bicycle is described as an example of vehicle 2.

More specifically, vehicle body state estimation system 1 includes obtainer 11, analyzer 12, component estimator 13, state estimator 14, and notifier 15.

Obtainer 11 obtains appearance information that is information indicating the appearance of vehicle 2. The appearance information includes a mechanical component included in vehicle 2. Such mechanical component includes at least one of a chain, a gear, a motor (particularly a motor shaft), a transmission, a sprocket, a pulley, a pedal, a crank, a wheel, a rim, a hub, a tire, a light, a frame, a brake, a tire tube, a light, a battery, a bolt, a lock, a suspension, or a stand.

The appearance information obtained by obtainer 11 includes at least one of Red-Green-Blue (RGB) camera information, monochrome camera information, thermal image information, ultrasonic image information, laser light information, or Infrared Light (IR) image information, each of which is generated by contactless sensing. These items of appearance information are mainly still images, and obtained by various sensor cameras such as a RGB camera, a monochrome camera, a thermal imaging camera, an ultrasonic camera, a laser diode, and an image sensor. For example, the appearance information is obtained by performing contactless sensing by which the terminal device images the mechanical components of vehicle 2 as shown in FIG. 2A. In other words, obtainer 11 obtains the appearance information from a sensor mounted on the terminal device.

Obtainer 11 outputs the obtained appearance information to analyzer 12.

Analyzer 12 analyzes the appearance information and extracts one or more regions included in the appearance of vehicle 2 from the appearance information. For example, analyzer 12 divides the appearance of vehicle 2 into a plurality of regions each having similar features (color, brightness, texture, etc.) in the appearance information, and extracts the plurality of regions. In other words, analyzer 12 extracts the plurality of regions by dividing the appearance into the plurality of regions according to the features indicated in the appearance information. Since the plurality of regions extracted by analyzer 12 show an outer shape, the plurality of regions include the mechanical components included in vehicle 2.

Analyzer 12 outputs the extracted regions, in other words, the analysis result, to component estimator 13.

Component estimator 13 estimates, based on the analysis result of analyzer 12, the color of each region extracted by analyzer 12 as shown in FIG. 2B. In other words, component estimator 13 estimates the color of the mechanical component included in each region extracted by analyzer 12. For example, since each region is composed of the same features, component estimator 13 can estimate the component shape of each mechanical component from the outer shape of the region. Since each region is composed of a plurality of pixels, component estimator 13 can perform estimation of each mechanical component for each of the pixels included in the mechanical component.

Component estimator 13 estimates a mechanical component included in each region, based on the component shape and the color which are estimated for the region.

Note that component estimator 13 may be a machine learning model that has been trained to estimate the colors of the mechanical components included in the regions extracted by analyzer 12.

Component estimator 13 outputs, to state estimator 14, the coordinates of pixels and the color (the colors of pixels included in each mechanical component) which are estimated for each estimated mechanical component.

State estimator 14 estimates whether the state of vehicle 2 is an abnormal state or a normal state based on the colors of the regions that are estimated by component estimator 13, in other words, based on the mechanical components estimated by component estimator 13, and outputs the estimation result. For example, since each of the estimated mechanical components is composed of a plurality of pixels, state estimator 14 may estimate, for each of pixels included in each estimated mechanical component, whether the state of the mechanical component is an abnormal state or a normal state based on the colors of the pixels estimated by component estimator 13.

More specifically, state estimator 14 calculates, for each of the pixels indicating each mechanical component, a color difference between the color of the mechanical component that is estimated by component estimator 13 and a color of the mechanical component in a normal state. If the calculated value is within a predetermined range, state estimator 14 determines that the state of the mechanical component is normal. On the other hand, state estimator 14 calculates, for each of the pixels indicating each mechanical component, a color difference between the color of the mechanical component that is estimated by component estimator 13 and a color of the mechanical component in an abnormal state. If the calculated value is within a predetermined range, state estimator 14 determines that the state of the mechanical component is abnormal.

If the states of all the mechanical components included in vehicle 2 are determined to be normal, state estimator 14 determines that the state of vehicle 2 is a normal state. If the state of at least one of the mechanical components included in vehicle 2 is determined to be abnormal, state estimator 14 determines that the state of vehicle 2 is an abnormal state.

Note that state estimator 14 may be a machine learning model that has been trained to estimate whether the state of vehicle 2 is an abnormal state or a normal state based on the colors of the regions that are estimated by component estimator 13.

State estimator 14 may further estimate at least one of (i) a probability that vehicle 2 is in an abnormal state or (ii) a remaining time until vehicle 2 reaches the abnormal state, and output the estimation result to notifier 15. More specifically, after state estimator 14 estimates that the state of vehicle 2 is an abnormal state, state estimator 14 may further estimate at least one of (iii) a probability that each mechanical component is in the abnormal state or (iv) a remaining time until each mechanical component reaches the abnormal state, and output the estimation result to notifier 15. Based on at least one of (iii) the probability that each mechanical component is in the abnormal state or (iv) the remaining time until each mechanical component reaches the abnormal state, state estimator 14 may estimate at least one of (i) a probability that vehicle 2 is in the abnormal state or (ii) a remaining time until vehicle 2 reaches the abnormal state, and output the estimation result to notifier 15.

For example, when a plurality of mechanical components are estimated to be in an abnormal state, it is possible to estimate a probability that vehicle 2 is in an abnormal state based on a mechanical component having the highest probability of the abnormal state, and output the estimation result to notifier 15. Alternately, when a plurality of mechanical components are estimated to be in an abnormal state, it is possible to estimate a remaining time until vehicle 2 reaches an abnormal state based on a mechanical component having the shortest remaining time until the mechanical component reaches the abnormal state, and output the estimation result to notifier 15.

State estimator 14 outputs the estimation result. In the embodiment, state estimator 14 outputs the estimation result to notifier 15.

Notifier 15 issues notification that the state of vehicle 2 is an abnormal state or that the state of vehicle 2 is a normal state, which is the estimation result of state estimator 14. Notifier 15 is, for example, a display unit such as a display, an acoustic unit that outputs sound, a light source that turns on or blinks a lamp, or the like. Thus, the user can recognize the state of vehicle 2 via notifier 15.

Next, it is possible to estimate the state of vehicle 2 by taking into account the colors of the mechanical components included in the appearance information and the operation of vehicle 2 included in the appearance information, and output the estimation result. In the following, the same contents as those described above will be omitted from the description as appropriate. For example, even if the mechanical component is operating, the analysis of analyzer 12 and the estimation of component estimator 13 are the same as described above, and thus the description thereof will be omitted.

Specifically, the appearance information may further include the operation of vehicle 2. In other words, the appearance information is image information that is video.

In this case, obtainer 11 obtains the appearance information that is information indicating the appearance of vehicle 2. Obtainer 11 outputs the obtained appearance information to analyzer 12.

Analyzer 12 analyzes the video included in the appearance information, and extracts one or more regions included in the appearance of vehicle 2 from the video of the appearance information. Analyzer 12 outputs the regions extracted based on the same colors (groups), in other words, the analysis result, to component estimator 13.

Furthermore, analyzer 12 analyzes sound emitted by vehicle 2 that is included in the appearance information, and outputs an analysis result indicating a frequency spectrum of the sound to component estimator 13. For example, analyzer 12 generates the frequency spectrum by decomposing the sound emitted by vehicle 2 included in the appearance information into frequency components using Fourier transform, and outputs the result to component estimator 13.

Component estimator 13 estimates the color of each region extracted by analyzer 12 based on the analysis result of analyzer 12. That is, component estimator 13 estimates the color of the mechanical component included in each region extracted by analyzer 12.

Furthermore, component estimator 13 estimates the operation of the mechanical component included in each region extracted by analyzer 12. That is, component estimator 13 estimates the operation of each mechanical component based on the frequency spectrum of the sound emitted by the mechanical component. The operation of the mechanical component includes sound emitted by the mechanical component, vibration of the mechanical component, or the like from which the environmental sound, vibration of the other objects, and the like are eliminated.

Note that it is possible that a storage stores, for each of the mechanical components, a frequency spectrum sample of sound emitted by the mechanical component, and that component estimator 13 compares the frequency spectrum sample with a frequency spectrum of sound actually emitted by vehicle 2 in order to estimate the mechanical component. Note that component estimator 13 may estimate the mechanical component included in each region, based on frequency spectrums of sounds emitted by the mechanical component and vehicle 2.

Note that component estimator 13 may be a machine learning model that has been trained to estimate the color of the mechanical component included in each region extracted by analyzer 12, and trained to estimate the operation of the mechanical component based on the frequency spectrum analyzed by analyzer 12. The operation of the mechanical component includes sound emitted by the mechanical component, vibration of the mechanical component, or the like.

Component estimator 13 outputs, to state estimator 14, the coordinates of pixels, the color, and the emitted sound which are estimated for each estimated mechanical component.

Furthermore, state estimator 14 estimates whether the state of vehicle 2 is an abnormal state or a normal state based on the color of each region that is estimated by component estimator 13 and the operation of each mechanical component that is estimated by component estimator 13, and outputs the estimation result. Note that state estimator 14 may be a machine learning model that has been trained to estimate whether the state of vehicle 2 is an abnormal state or a normal state based on the colors of the regions that are estimated by component estimator 13 and the operations of the mechanical components that are estimated by component estimator 13.

Furthermore, state estimator 14 may further estimate at least one of (i) a probability that vehicle 2 is in an abnormal state or (ii) a remaining time until vehicle 2 reaches the abnormal state.

State estimator 14 outputs the estimation result. In the embodiment, state estimator 14 outputs the estimation result to notifier 15.

Notifier 15 issues notification that the state of vehicle 2 is an abnormal state or that the state of vehicle 2 is a normal state, which is the estimation result of state estimator 14.

Next, state estimator 14 may estimate the state of vehicle 2 based on the color of each region that is estimated by component estimator 13, and estimate the state of vehicle 2 based on the operation of each mechanical component that is estimated by component estimator 13. In the following, the same contents as those described above will be omitted from the description as appropriate. For example, even if the mechanical component is operating, the analysis of analyzer 12 and the estimation of component estimator 13 are the same as described above, and thus the description thereof will be omitted.

Specifically, when component estimator 13 estimates the color of the mechanical component included in each region extracted by analyzer 12, state estimator 14 estimates whether the state of vehicle 2 is an abnormal state or a normal state based on the color of each mechanical component that is estimated by component estimator 13.

Furthermore, when component estimator 13 estimates the operation of the mechanical component included in each region extracted by analyzer 12, state estimator 14 estimates whether the state of vehicle 2 is an abnormal state or a normal state based on the operation of each mechanical component that is estimated by component estimator 13. The operation of each mechanical component includes sound related to the mechanical component, vibration of the mechanical component, or the like from which the environmental sound, vibration of the other objects, and the like are eliminated.

Note that state estimator 14 may be a machine learning model that has been trained to estimate whether the state of vehicle 2 is an abnormal state or a normal state based on the colors of the regions that are estimated by component estimator 13, and further trained to estimate whether the state of vehicle 2 is an abnormal state or a normal state based on operations of the mechanical components that are estimated by component estimator 13 when component estimator 13 estimates the operations.

State estimator 14 may further estimate at least one of (i) a probability that vehicle 2 is in an abnormal state or (ii) a remaining time until vehicle 2 reaches the abnormal state.

State estimator 14 estimates whether the state of vehicle 2 is an abnormal state or a normal state based on the result of the estimation performed based on the color of each mechanical component and the result of the estimation performed based on the operation of each mechanical component, and outputs the estimation result.

For example, when the result of the estimation performed based on the color of each mechanical component is that the state of the mechanical component is normal, and the result of the estimation performed based on the sound of each mechanical component is that the state of the mechanical component is normal, state estimator 14 estimates that the state of vehicle 2 is normal and outputs the estimation result.

When the result of the estimation performed based on the color of each mechanical component is that the state of the mechanical component is normal, and the result of the estimation performed based on the sound of each mechanical component is that the state of a mechanical component is abnormal, state estimator 14 estimates that the state of vehicle 2 is abnormal and outputs the estimation result.

When the result of the estimation performed based on the color of each mechanical component is that the state of a mechanical component is abnormal and the result of the estimation performed based on the sound of each mechanical component is that the state of the mechanical component is normal, state estimator 14 determines whether or not there is a deformation in the component shape of the mechanical component that is estimated by component estimator 13. If the component shape of the mechanical component has deformation, state estimator 14 estimates that the state of vehicle 2 is an abnormal state and outputs the estimation result. On the other hand, if there is no deformation in the component shape of the mechanical component, state estimator 14 estimates that the state of vehicle 2 is normal and outputs the estimation result.

When the result of the estimation performed based on the color of each mechanical component is that the state of a mechanical component is abnormal, and the result of the estimation performed based on the sound of each mechanical component is that the state of a mechanical component is abnormal, state estimator 14 estimates that the state of vehicle 2 is abnormal, and outputs the estimation result to notifier 15.

Notifier 15 issues notification that the state of vehicle 2 is an abnormal state or that the state of vehicle 2 is a normal state, which is the estimation result of state estimator 14.

### <Operation Example 1>

Next, with reference to FIG. 3, operation example 1 of vehicle body state estimation system 1 that estimates the state of vehicle 2 based on the color of each mechanical component will be described.

FIG. 3 is a flowchart showing operation example 1 of vehicle body state estimation system 1 according to the embodiment.

First, vehicle body state estimation system 1 images vehicle 2, and thereby obtainer 11 obtains appearance information that is information indicating the appearance of vehicle 2 (S11). Obtainer 11 outputs the obtained appearance information to analyzer 12.

Next, analyzer 12 analyzes the appearance information and extracts one or more regions included in the appearance of vehicle 2 from the appearance information (S12). Analyzer 12 outputs the extracted regions to component estimator 13.

Next, component estimator 13 estimates the color of the mechanical component included in each region extracted by analyzer 12 based on the analysis result of analyzer 12 (S13). Component estimator 13 outputs, to state estimator 14, the coordinates of pixels and the color which are estimated for each estimated mechanical component.

Next, state estimator 14 estimates whether the state of vehicle 2 is an abnormal state or a normal state based on the color of the mechanical component included in each region that is estimated by component estimator 13, in other words, based on each mechanical component estimated by component estimator 13 (S14). Here, state estimator 14 estimates whether the state of each mechanical component is an abnormal state or a normal state, for each of the pixels included in the mechanical component. State estimator 14 outputs the result of estimating the state of vehicle 2 to notifier 15.

Next, notifier 15 issues notification that the state of vehicle 2 is an abnormal state or that the state of vehicle 2 is a normal state, which is the estimation result of state estimator 14 (S15). Thus, the user can recognize the state of vehicle 2 via notifier 15. Then, operation example 1 of vehicle body state estimation system 1 in FIG. 3 is ended.

### <Operation Example 2>

Next, with reference to FIG. 4, operation example 2 of vehicle body state estimation system 1 that estimates the state of vehicle 2 based on the color and the operation of each mechanical component will be described. The same processing as in FIG. 3 will not be described as appropriate.

FIG. 4 is a flowchart showing operation example 2 of vehicle body state estimation system 1 according to the embodiment.

First, after performing steps S11 to S13, component estimator 13 estimates the operation of the mechanical component included in each region extracted by analyzer 12 (S13a). The operation of each mechanical component includes at least sound emitted by the mechanical component. Component estimator 13 outputs, to state estimator 14, the coordinates of pixels, the color, and the emitted sound which are estimated for each estimated mechanical component.

Next, state estimator 14 estimates whether the state of vehicle 2 is an abnormal state or a normal state based on the color of the mechanical component included in each region that is estimated by component estimator 13 and the operation of each mechanical components that is estimated by component estimator 13 (S14a). State estimator 14 outputs the result of estimating the state of vehicle 2 to notifier 15.

Next, notifier 15 issues notification that the state of vehicle 2 is an abnormal state or that the state of vehicle 2 is a normal state, which is the estimation result of state estimator 14 (S15). Thus, the user can recognize the state of vehicle 2 via notifier 15. Then, operation example 2 of vehicle body state estimation system 1 in FIG. 4 is ended.

### <Operation Example 3>

Next, with reference to FIG. 5, operation example 3 of vehicle body state estimation system 1 that estimates the state of vehicle 2 based on the color and the operation of each mechanical component will be described. The same processing as in FIG. 4 will not be described as appropriate.

FIG. 5 is a flowchart showing operation example 3 of vehicle body state estimation system 1 according to the embodiment.

First, after performing steps S11 to S13, component estimator 13 estimates the operation of the mechanical component included in each region extracted by analyzer 12 (S13a). The operation of each mechanical component includes at least sound emitted by the mechanical component. Component estimator 13 outputs, to state estimator 14, the coordinates of pixels, the color, and the emitted sound which are estimated for each estimated mechanical component.

Next, state estimator 14 estimates whether the state of vehicle 2 is an abnormal state or a normal state based on the color of the mechanical component included in each region that is estimated by component estimator 13 (S14).

Next, state estimator 14 estimates whether the state of vehicle 2 is an abnormal state or a normal state based on the operation of each mechanical component that is estimated by component estimator 13 (S14b).

Next, state estimator 14 estimates whether the state of vehicle 2 is an abnormal state or a normal state based on the result of the estimation performed based on the color of each mechanical component and the result of the estimation performed based on the operation of each mechanical component (S14c). State estimator 14 outputs the estimation result to notifier 15.

Next, notifier 15 issues notification that the state of vehicle 2 is an abnormal state or that the state of vehicle 2 is a normal state, which is the estimation result of state estimator 14 (S15). Thus, the user can recognize the state of vehicle 2 via notifier 15. Then, operation example 3 of vehicle body state estimation system 1 in FIG. 5 is ended.

### <Effects>

Next, the effects of vehicle body state estimation system 1 and the like according to the embodiment will be described.

As described above, vehicle body state estimation system 1 according to technique 1 in the embodiment is vehicle body state estimation system 1 that estimates a state of vehicle 2 that is a human-powered vehicle or an electric bicycle, and includes: obtainer 11 that obtains appearance information which is information indicating an appearance of vehicle 2; analyzer 12 that analyzes the appearance information and extracts, from the appearance information, a region included in the appearance of vehicle 2; component estimator 13 that estimates a color of the region extracted by analyzer 12; and state estimator 14 that estimates whether the state of vehicle 2 is an abnormal state or a normal state based on the color of the region that is estimated by component estimator 13, and outputs a result of the estimation.

According to this, state estimator 14 outputs the state of vehicle 2 so that the user can learn the state of vehicle 2. Therefore, if the state of vehicle 2 is an abnormal state, the user is motivated to repair vehicle 2.

In addition, the user can learn the state of vehicle 2 without consulting a specialized service provider capable of determining the state of vehicle 2. Therefore, if the state of vehicle 2 is a normal state, the user does not need to perform maintenance of vehicle 2.

Therefore, according to the embodiment, it is possible to suppress an increase in maintenance costs of vehicle 2 while suppressing an increase of a frequency of failures of vehicle 2.

Furthermore, vehicle body state estimation system 1 according to technique 2 in the embodiment is vehicle body state estimation system 1 according to technique 1 in which the state of vehicle 2 is a state of a mechanical component included in vehicle 2.

According to this, it is possible to output a result of estimating whether the state of each mechanical component that is a component included in vehicle 2 is an abnormal state or a normal state. Therefore, the user can learn the state of each mechanical component.

Furthermore, vehicle body state estimation system 1 according to technique 3 in the embodiment is vehicle body state estimation system 1 according to technique 2 in which the region extracted by analyzer 12 includes the mechanical component included in vehicle 2, component estimator 13 estimates a color of the mechanical component included in the region extracted by analyzer 12, and state estimator 14 estimates whether the state of vehicle 2 is the abnormal state or the normal state based on the color of the mechanical component that is estimated by component estimator 13, and outputs a result of the estimation.

According to this, it is estimated whether the state of each mechanical component is an abnormal state or a normal state based on the color state of the mechanical component. Therefore, the state of each mechanical component can be estimated with higher accuracy.

Furthermore, vehicle body state estimation system 1 according to technique 4 in the embodiment is vehicle body state estimation system 1 according to technique 2 or technique 3 in which the mechanical component includes at least one of a chain, a gear, a motor, a transmission, a sprocket, a pulley, a pedal, a crank, a wheel, a rim, a hub, a tire, a light, a frame, a brake, a tire tube, a light, a battery, a bolt, a lock, a suspension, or a stand.

According to this, it is possible to estimate the states of various mechanical components included in vehicle 2.

Furthermore, vehicle body state estimation system 1 according to technique 5 in the embodiment is vehicle body state estimation system 1 according to any one of techniques 2 to 4 in which the appearance information further includes an operation of vehicle 2, component estimator 13 further estimates an operation of the mechanical component included in the region extracted by analyzer 12, and state estimator 14 further estimates whether the state of vehicle 2 is the abnormal state or the normal state based on the operation of the mechanical component that is estimated by component estimator 13, and outputs the estimation result.

According to this, it is further estimated whether the state of each mechanical component is an abnormal state or a normal state based on the operation of the mechanical component. Therefore, the state of each mechanical component can be estimated with higher accuracy.

Furthermore, vehicle body state estimation system 1 according to technique 6 in the embodiment is vehicle body state estimation system 1 according to any one of techniques 1 to 5 in which the region extracted by analyzer 12 includes a mechanical component included in vehicle 2, the appearance information further includes an operation of vehicle 2, component estimator 13 estimates a color of the mechanical component included in the region extracted by analyzer 12, and further estimates an operation of the mechanical component included in the region extracted by analyzer 12, and state estimator 14 estimates whether the state of vehicle 2 is the abnormal state or the normal state based on the color of the mechanical component that is estimated by component estimator 13 and the operation of the mechanical component that is estimated by component estimator 13, and outputs a result of the estimation.

According to this, it is estimated whether the state of each mechanical component is an abnormal state or a normal state based on the color and the operation of the mechanical component. Therefore, the state of each mechanical component can be estimated with higher accuracy.

Furthermore, vehicle body state estimation system 1 according to technique 7 in the embodiment is vehicle body state estimation system 1 according to technique 6 in which the region extracted by analyzer 12 includes the mechanical component included in vehicle 2, the appearance information further includes an operation of vehicle 2, component estimator 13 estimates a color of the mechanical component included in the region extracted by analyzer 12, state estimator 14 estimates whether the state of vehicle 2 is the abnormal state or the normal state based on the color of the mechanical component that is estimated by component estimator 13, component estimator 13 further estimates an operation of the mechanical component included in the region extracted by analyzer 12, state estimator 14 further estimates whether the state of vehicle 2 is the abnormal state or the normal state based on the operation of the mechanical component that is estimated by component estimator 13, and state estimator 14 estimates whether the state of vehicle 2 is the abnormal state or the normal state based on a result of the estimation performed based on the color of the mechanical component and a result of the further estimation performed based on the operation of the mechanical component, and outputs the estimation result.

According to this, it is possible to estimate whether the state of each mechanical component is an abnormal state or a normal state based on (i) the result indicating whether the state of the mechanical component is the abnormal state or the normal state based on the color of the mechanical component and (ii) the result indicating whether the state of the mechanical component is the abnormal state or the normal state based on the operation of the mechanical component. Therefore, the state of each mechanical component can be estimated with higher accuracy.

Furthermore, vehicle body state estimation system 1 according to technique 8 in the embodiment is vehicle body state estimation system 1 according to technique 6 in which the operation of the mechanical component includes sound emitted by the mechanical component and vibration of the mechanical component.

According to this, it is estimated whether the state of each mechanical component is an abnormal state or a normal state based on color, sound, and vibration of the mechanical component. Therefore, the state of each mechanical component can be estimated with higher accuracy.

Furthermore, vehicle body state estimation system 1 according to technique 9 in the embodiment is vehicle body state estimation system 1 according to technique 7 in which the operation of the mechanical component includes sound emitted by the mechanical component and vibration of the mechanical component.

According to this, it is estimated whether the state of each mechanical component is an abnormal state or a normal state based on color, sound, and vibration of the mechanical component. Therefore, the state of each mechanical component can be estimated with higher accuracy.

Furthermore, vehicle body state estimation system 1 according to technique 10 in the embodiment is vehicle body state estimation system 1 according to any one of techniques 1 to 9 in which the appearance information obtained by obtainer 11 includes at least one of Red-Green-Blue (RGB) camera information, monochrome camera information, thermal image information, ultrasonic image information, laser light information, or Infrared Light (IR) image information, each of which is generated by contactless sensing.

According to this, the color of each mechanical component can be estimated. Therefore, it is possible to estimate whether the state of vehicle 2 is the abnormal state or the normal state based on the color state of each mechanical component and output the estimation result.

Furthermore, vehicle body state estimation system 1 according to technique 11 in the embodiment is vehicle body state estimation system 1 according to any one of techniques 1 to 10 in which state estimator 14 further estimates and outputs at least one of (i) a probability that vehicle 2 is in the abnormal state or (ii) a remaining time until vehicle 2 reaches the abnormal state.

According to this, it is possible to output not only the state of vehicle 2 but also at least one of (i) a probability that vehicle 2 is in an abnormal state or (ii) a remaining time until vehicle 2 reaches the abnormal state. Therefore, the user is motivated to predict the period until vehicle 2 fails or perform repair and replacement of components of vehicle 2 until vehicle 2 fails. As a result, it is possible to suppress an increase in maintenance costs of vehicle 2 while suppressing an increase in a frequency of failures of vehicle 2.

Furthermore, vehicle body state estimation system 1 according to technique 12 in the embodiment is vehicle body state estimation system 1 according to any one of techniques 1 to 11 that further includes notifier 15 that issues notification, as the result outputted by state estimator 14, that the state of vehicle 2 is the abnormal state or that the state of vehicle 2 is the normal state.

According to this, the user can recognize the state of vehicle 2 notified by notifier 15.

Furthermore, vehicle body state estimation system 1 according to technique 13 in the embodiment is vehicle body state estimation system 1 according to any one of techniques 1 to 12 that is a portable external device or a stationary external device.

According to this, the appearance information of vehicle 2 can be easily obtained.

Furthermore, a vehicle body state estimation method according to technique 14 in the embodiment is a vehicle body state estimation method for estimating a state of vehicle 2 that is a human-powered vehicle or an electric bicycle, and includes: obtaining, by obtainer 11, appearance information that is information indicating an appearance of the vehicle; analyzing the appearance information, and extracting a region included in the appearance of the vehicle from the appearance information, the analyzing and the extracting being performed by analyzer 12; estimating, by component estimator 13, a color of the region extracted by analyzer 12; and estimating whether the state of the vehicle is an abnormal state or a normal state based on the color of the region that is estimated by component estimator 13, and outputting a result of the estimating, the estimating and the outputting being performed by state estimator 14.

This vehicle body state estimation method also produces the same effects as described above.

Furthermore, a program according to technique 15 in the embodiment is a program for causing a computer to execute the vehicle body state estimation method according to technique 14.

This program also produces the same effects as described above.

### (Other Variations)

Although the vehicle body state estimation system and the like according to the present disclosure have been described based on the above embodiment, the present disclosure is not limited to the embodiment. Those skilled in the art will readily appreciate that embodiments arrived at by making various modifications to the above embodiment without materially departing from the scope of the present disclosure may be included within the present disclosure.

For example, regarding the vehicle body state estimation system and the like according to the present disclosure, a program capable of executing the vehicle body state estimation method may be stored in a cloud server. In this case, it is possible that a terminal device that obtains the appearance information transmits the appearance information to the cloud server, and the cloud server estimates whether the state of the vehicle is an abnormal state or a normal state. The cloud server may transmit the result of estimating the state of the vehicle to the terminal device. The terminal device may notify the user of the result of estimating the state of the vehicle, which is the result received from the cloud server. In this case, the vehicle body state estimation system may include: a cloud server that stores a program capable of executing the vehicle body state estimation method; and a terminal device that is communicable with the cloud server, obtains the appearance information, and issues notification of the result of estimating the vehicle state by the cloud server.

Note that the present disclosure may include embodiments obtained by making various modifications, which those skilled in the art will arrive at, on the above embodiment, or embodiments obtained by selectively combining the constituent elements and functions disclosed in the above embodiment, without materially departing from the scope of the present disclosure.

### [Reference Signs List]

- 1: vehicle body state estimation system
- 2: vehicle
- 11: obtainer
- 12: analyzer
- 13: component estimator
- 14: state estimator
- 15: notifier

## Claims

1. A vehicle body state estimation system that estimates a state of a vehicle that is a human-powered vehicle or an electric bicycle, the vehicle body state estimation system comprising:
an obtainer that obtains appearance information that is information indicating an appearance of the vehicle;
an analyzer that analyzes the appearance information and extracts, from the appearance information, a region included in the appearance of the vehicle;
a component estimator that estimates a color of the region extracted by the analyzer; and
a state estimator that estimates whether the state of the vehicle is an abnormal state or a normal state based on the color of the region that is estimated by the component estimator, and outputs a result of the estimation.

2. The vehicle body state estimation system according to claim 1,
wherein the state of the vehicle is a state of a mechanical component included in the vehicle.

3. The vehicle body state estimation system according to claim 2,
wherein the region extracted by the analyzer includes the mechanical component included in the vehicle,
the component estimator estimates a color of the mechanical component included in the region extracted by the analyzer, and
the state estimator estimates whether the state of the vehicle is the abnormal state or the normal state based on the color of the mechanical component that is estimated by the component estimator, and outputs a result of the estimation.

4. The vehicle body state estimation system according to claim 2 or claim 3,
wherein the mechanical component includes at least one of a chain, a gear, a motor, a transmission, a sprocket, a pulley, a pedal, a crank, a wheel, a rim, a hub, a tire, a light, a frame, a brake, a tire tube, a light, a battery, a bolt, a lock, a suspension, or a stand.

5. The vehicle body state estimation system according to claim 2 or claim 3,
wherein the appearance information further includes an operation of the vehicle,
the component estimator further estimates an operation of the mechanical component included in the region extracted by the analyzer, and
the state estimator further estimates whether the state of the vehicle is the abnormal state or the normal state based on the operation of the mechanical component that is estimated by the component estimator, and outputs a result of the further estimation.

6. The vehicle body state estimation system according to any one of claims 1 to 3,
wherein the region extracted by the analyzer includes a mechanical component included in the vehicle,
the appearance information further includes an operation of the vehicle,
the component estimator estimates a color of the mechanical component included in the region extracted by the analyzer, and further estimates an operation of the mechanical component included in the region extracted by the analyzer, and
the state estimator estimates whether the state of the vehicle is the abnormal state or the normal state based on the color of the mechanical component that is estimated by the component estimator and the operation of the mechanical component that is estimated by the component estimator, and outputs a result of the estimation.

7. The vehicle body state estimation system according to any one of claims 1 to 3,
wherein the region extracted by the analyzer includes a mechanical component included in the vehicle,
the appearance information further includes an operation of the vehicle,
the component estimator estimates a color of the mechanical component included in the region extracted by the analyzer,
the state estimator estimates whether the state of the vehicle is the abnormal state or the normal state based on the color of the mechanical component that is estimated by the component estimator,
the component estimator further estimates an operation of the mechanical component included in the region extracted by the analyzer,
the state estimator further estimates whether the state of the vehicle is the abnormal state or the normal state based on the operation of the mechanical component that is estimated by the component estimator, and
the state estimator estimates whether the state of the vehicle is the abnormal state or the normal state based on a result of the estimation performed based on the color of the mechanical component and a result of the further estimation performed based on the operation of the mechanical component, and outputs a result of the estimation.

8. The vehicle body state estimation system according to claim 6,
wherein the operation of the mechanical component includes sound emitted by the mechanical component and vibration of the mechanical component.

9. The vehicle body state estimation system according to claim 7,
wherein the operation of the mechanical component includes sound emitted by the mechanical component and vibration of the mechanical component.

10. The vehicle body state estimation system according to any one of claims 1 to 3,
wherein the appearance information obtained by the obtainer includes at least one of Red-Green-Blue (RGB) camera information, monochrome camera information, thermal image information, ultrasonic image information, laser light information, or Infrared Light (IR) image information, each of which is generated by contactless sensing.

11. The vehicle body state estimation system according to any one of claims 1 to 3,
wherein the state estimator further estimates and outputs at least one of (i) a probability that the vehicle is in the abnormal state or (ii) a remaining time until the vehicle reaches the abnormal state.

12. The vehicle body state estimation system according to any one of claims 1 to 3, further comprising:
a notifier that issues notification, as the result outputted by the state estimator, that the state of the vehicle is the abnormal state or that the state of the vehicle is the normal state.

13. The vehicle body state estimation system according to any one of claims 1 to 3,
wherein the vehicle body state estimation system is a portable external device or a stationary external device.

14. A vehicle body state estimation method for estimating a state of a vehicle that is a human-powered vehicle or an electric bicycle, the vehicle body state estimation method comprising:
obtaining, by an obtainer, appearance information that is information indicating an appearance of the vehicle;
analyzing the appearance information, and extracting, from the appearance information, a region included in the appearance of the vehicle, the analyzing and the extracting being performed by an analyzer;
estimating, by a component estimator, a color of the region extracted by the analyzer; and
estimating whether the state of the vehicle is an abnormal state or a normal state based on the color of the region that is estimated by the component estimator, and outputting a result of the estimating, the estimating and the outputting being performed by a state estimator.

15. A program for causing a computer to execute the vehicle body state estimation method according to claim 14.
